# EUROPEAN PATENT SPECIFICATION

(11) **EP 2 818 239 B1**
(45) Date of publication and mention of the grant of the patent: **06.11.2019**
(21) Application number: 14174778.2
(22) Date of filing: 27.06.2014
(51) Int. Cl.: B01J 20/04, B01J 20/28, B01D 53/02, C01B 13/02, C01F 11/18

(54) **OXYGEN SELECTIVE ADSORBENT FOR EASY DESORPTION AND PREPARATION METHOD THEREOF**
SAUERSTOFFSELEKTIVES ADSORBENS ZUR EINFACHEN DESORPTION UND HERSTELLUNGSVERFAHREN DAFÜR
ADSORBANT SÉLECTIF DE L'OXYGÈNE AFIN DE FACILITER LA DÉSORPTION ET SON PROCÉDÉ DE PRÉPARATION

(30) Priority: 28.06.2013 KR 20130075908
(43) Date of publication of application: 31.12.2014
(73) Proprietor: Korea Institute of Energy Research, Daejeon 305-343 (KR)
(72) Inventor: Park, Jong-Ho, Daejeon 305-721 (KR); Jung, Taesung, Daejeon 305-791 (KR); Beum, Hee-Tae, Daejeon 305-745 (KR); Park, Jong-Kee, Daejeon 305-769 (KR); Han, Sang-Sup, Daejeon 305-773 (KR); Cho, Dong Woo, Daejeon 305-343 (KR)
(74) Representative: Adam, Holger

(56) References cited:
- WO-A2-2012/102554
- WILLIAM R BRICE ET AL: "Subsolidus phase relations in aragonite-type carbonates. III. The systems MgCO3-CaCO3-BaCO3, MgCO3-CaCO3-SrCO3, and MgCO3-SrCO3-BaCO3", THE AMERICAN MINERALOGIST, vol. 58, no. 11-12, November 1973 (1973-11), pages 979-985, XP055147636, ISSN: 0003-004X
- M D JUDD ET AL: "FORMATION AND SURFACE PROPERTIES OF ELECTRON-EMISSIVE COATINGS III. THERMAL DECOMPOSITION AND SINTERING OF SOME CO-PRECIPITATED ALKALINE-EARTH CARBONATES", JOURNAL OF APPLIED CHEMISTRY, vol. 20, no. 3, March 1970 (1970-03), pages 69-72, XP055147576, DOI: 10.1002/jctb.5010200301

## Description

### TECHNICAL FIELD

The present invention relates to an oxygen selective adsorbent capable of producing high purity oxygen by adsorbing oxygen from air in a rapid adsorption rate, and a preparation method thereof.

### BACKGROUND ART

The easiest and fastest way to reduce the emission of carbon dioxide is regarded as being a carbon dioxide capture & storage (CCS) method which recovers carbon dioxide from a carbon dioxide generating source and geologically stores it. A CCS technology is broadly divisible into carbon dioxide recovery, transfer and storage, and among them, the recovery cost of carbon dioxide accounts for 75% of the total cost of CCS. Thus, in order to develop a cost-effective CCS technology, it is desperately required to reduce the recovery cost of carbon dioxide.

In order to cost-effectively reduce carbon dioxide generated in a power generation field, post-combustion treatment technology, pre-combustion treatment technology, and the like are being researched, and much research on integrated gasification combined cycle (IGCC) which is one of pure oxygen combustion and highly efficient power generation technologies, is also currently underway as an alternative. However, in case of pure oxygen combustion and IGCC power generation, high concentration of oxygen is needed to be supplied, and presently oxygen separation using a cryogenic separation process for producing and supplying oxygen consumes 17% of generated electricity, thereby decreasing generation efficiency by about 9%. Thus, it is difficult to secure the economics of a carbon dioxide recovery process using pure oxygen combustion, without developing an oxygen separation process with low cost and high efficiency.

For oxygen separation, an adsorption separation technique currently adopts an adsorbent selectively adsorbing nitrogen in the air Conventional adsorption separation techniques include pressure swing adsorption (PSA) using process of adsorbing nitrogen in the air under high pressure and desorbing it under low pressure, disclosed in Korean Patent Laid-Open Publication No. 1998-070453, U.S. Patent Publication No. 2,944,627, etc.; vacuum swing adsorption (VSA) which adsorbs nitrogen under normal pressure and desorbs it under vacuum, disclosed in Korean Patent Laid-Open Publication No. 2010-0066744, etc.; or a VPSA process combining PSA and VSA, disclosed in Japanese Patent Laid-Open Publication No. (Hei)5-184851, U.S. Patent Publication No. 4,781,735, U.S. Patent Publication No. 5,015,271, etc. However, since a large-capacity vacuum pump or compressor was difficult to be developed, a large-capacity adsorption separation process has not been commercialized. In addition, in order to selectively adsorb nitrogen accounting for 80% in the air, an adsorbent amount required per oxygen production unit is increased, so that the size of an adsorption tower is required to be increased.

Among further prior art, Brice et al., The American Mineralogist (1973), vol. 58, no. 11-12, pp. 979-985, discloses mixed particles, prepared by reacting barium, strontium and magnesium carbonate in acetone with varying ratios, followed by hand grinding.

Furthermore, Judd et al., Journal of Applied Chemistry (1970), vol. 20, pp. 69-72, discloses co-precipitated carbonates of sodium, calcium, strontium and barium.

Thus, in order to overcome the foregoing problems, an oxygen selective adsorbent is used. Since the ratio of nitrogen and oxygen in the air is 80%/20%, the amount of the oxygen selective adsorbent to be used is only 1/4 of the nitrogen selective adsorbent, for producing the same amount of oxygen. Thus, miniaturization of the apparatus may be attempted, and a large-capacity adsorption separation technique is easy to be applied.

Barium oxide is a well-known material which reacts with oxygen, and via an oxidation reaction represented by the following Reaction Formula 1, is converted into barium peroxide, thereby adsorbing oxygen in this process, and discharging oxygen via a reduction reaction under oxygen free atmosphere. Thus, barium oxide was also used in a preparation process of oxygen in the early 20th century, owing to such characteristic.

[Reaction Formula 1] BaO + ½ O₂ =2BaO₂

As seen from the above reaction formula, under isothermal condition, the increased partial pressure of oxygen leads to the adsorption (absorption, reaction) of oxygen, then the decreased partial pressure of oxygen leads to desorption (removal, separation, dissociation, decomposition) of oxygen. This applies to Vacuum Pressure Swing Adsorption (VPSA), so that oxygen in the air is selectively separated under high pressure more than equilibrium oxygen partial pressure, and the oxygen is removed under vacuum less than equilibrium oxygen partial pressure, thereby recovering oxygen. Herein, when removing oxygen, high vacuum operation is required in order to lower the oxygen partial pressure.

Korean Patent No. 1,189,593 discloses BaMg(CO₃)₂ as an oxygen selective adsorbent, which rapidly adsorbs oxygen in the air, and shows high thermal stability. However, in case of applying it to the VPSA process, relatively high vacuum operating condition is required on desorption, so that apparatus and operating costs may be increased.

Therefore, the present inventors exerted all efforts to overcome the foregoing problems, and as a result, found out that an oxygen selective adsorbent capable of low vacuum desorption may be prepared by mixing BaMg-based oxide adsorbent with a metal inorganic element as an additive, and have completed the present invention.

### SUMMARY OF THE INVENTION

The object of the present invention is to provide an oxygen selective adsorbent increasing transition (hereinafter, using the term "transition" instead of "equilibrium") oxygen partial pressure, and representing high thermal stability and excellent oxygen sorption capacity by mixing it with a metal additive, so as to be capable of desorbing oxygen under lower vacuum even at the same operating temperature than the existing oxygen selective adsorbent, and a preparation method thereof.

The present inventors repeated intensive research on an oxygen selective adsorbent, and as a result, found out that the addition of strontium and magnesium to barium which is an active element for oxygen adsorption increases isothermal adsorption equilibrium partial pressure, or improves the thermal stability and adsorption rate of particles, and have completed the oxygen selective adsorbent of the present invention.

In order to achieve the above objects, the present invention provides an oxygen selective adsorbent of carbonate-based compound containing Mg, Ba and Sr according to claim 5.

The present invention also provides a preparation method of an oxygen selective adsorbent of a carbonate-based compound containing Mg, Ba and Sr according to claim 1.

Meanwhile, the barium-containing compound may be any one selected from the group consisting of BaCO₃, BaCl₂, Ba(NO₃)₂, Ba(OH)₂ and BaC₂O₄, the carbonate may be any one selected from the group consisting of Na₂CO₃ NaHCO₃, K₂CO₃, KHCO₃, (NH₄)₂CO₃ and NH₄HCO₃, the magnesium precursor may be any one selected from the group consisting of Mg(NO₃)₂, MgCl₂, Mg(OH)₂, MgC₂O₄ and Mg(CH₃COOO)₂, and the strontium precursor may be any one selected from the group consisting of Sr(NO₃)₂ SrCl₂, Sr(OH)₂, SrC₂O₄ and Sr(CH₃COOO)₂.

### BRIEF DESCRIPTION OF THE DRAWINGS

FIG. 1 shows a change of powder XRD patterns of oxygen selective adsorbents mixed with a Sr additive, prepared in Reference Example 1. (Ba:Sr = (a) 1:0, (b) 0.95:0.05, (c) 0.9:0.1, (d) 0.8:0.2, (e) 0.7:0.3, (f) 0.6:0.4, (g) 0.5:0.5) [(left) measured at 20° ∼ 60°, (right) expanded range of 28.5° ∼ 30.5°)]
FIG. 2 shows isothermal oxygen adsorption equilibrium lines of the oxygen selective adsorbent prepared in Example 1 at 700°C.
FIG. 3 is SEM images of the oxygen selective adsorbent mixed with a Sr additive in a crystalline form, prepared in Reference Example 1. (Ba:Sr = (a) 1:0, (b) 0.9:0.1, (c) 0.8:0.2, (d) 0.7:0.3, (e) 0.6:0.4, (f) 0.5:0.5)
FIG. 4 shows adsorption/desorprtion rate of a BaMg-based adsorbent prepared in Reference Example 1 at 700°C. [(left) without an additive (rignt) Ba:Sr=0.8:0.2]
FIG. 5 is a graph representing the evaluation result of repetitive oxygen adsorption and desorption of the oxygen selective adsorbent prepared in Reference Example 1 at 700°C. [(left) without an additive (rignt) Ba:Sr=0.8:0.2]
FIG. 6(A) shows a shape of the adsorbent, and FIG. 6(B) shows a structure of the adsorbent, in the oxygen selective adsorbent prepared in Reference Example 2.
FIG. 7 shows shapes and structure of the oxygen selective adsorbents prepared in Reference Example 3. (from left to right, Ba:Sr = 0.8:0.2, 0.6:0.4, 0.5:0.5, 0.4:0.6, 0.2:0.8)
FIG. 8 shows isothermal adsorption equilibrium curves of the oxygen selective adsorbent prepared in Reference Examples 2 (rapid mixing) and 3 (slow mixing).

### DETAILED DESCRIPTION OF THE INVENTION

Unless otherwise defined, all technical and scientific terms used herein have the same meaning as commonly understood by a person skilled in the art to which the present invention pertains. In general, the terminology used herein is well-known in the art and commonly used.

Through the specification, unless otherwise stated explicitly, "comprising" any components will be understood to imply the inclusion of other components rather than the exclusion of any other components.

Hereinafter, the constitution and the functional effect of the preferred exemplary embodiments of the present invention will be described in detail with reference to the accompanying drawings.

According to claim 1, the present invention provides a preparation method of an oxygen selective adsorbent of a carbonate-based compound containing Mg, Ba and Sr, including (a) reacting a barium-containing compound with a strontium precursor or a magnesium precursor and a strontium precursor; and (b) drying and sintering a product prepared by step (a).

The preparation method of the oxygen selective adsorbent according to the present invention includes slowly injecting a second mixed solution of a magnesium precursor and a strontium precursor to a first mixed solution of a barium-containing compound and a carbonate to be reacted at 50 to 120°C, and then sintering it at about 700 to 800°C.

After the barium-containing compound and the carbonate are mixed in distilled water, they are dispersed using an ultrasonic disperser and a stirrer so as to be easily dissolved at room temperature, thereby preparing the first mixed solution, and the strontium precursor, or the magnesium precursor and the strontium precursor are mixed in distilled water, thereby preparing the second mixed solution. The second mixed solution is slowly injected to the first mixed solution, and reacted with stirring, and the product of the reaction is dried and sintered thereafter, thereby preparing the oxygen selective adsorbent of the carbonate-based compound containing Mg, Ba and Sr.

Meanwhile, the barium-containing compound may be selected from the group consisting of BaCO₃, BaCl₂, Ba(NO₃)₂, Ba(OH)₂, BaC₂O₄, and the like, the carbonate may be any one selected from the group consisting of Na₂CO₃, NaHCO₃, K₂CO₃, KHCO₃, (NH₄)₂CO₃, NH₄HCO₃ or the like, the magnesium precursor may be any one selected from the group consisting of Mg(NO₃)₂, MgCl₂, Mg(OH)₂, MgC₂O₄, Mg(CH₃COOO)₂ or the like, and the strontium precursor may be any one selected from the group consisting of Sr(NO₃)₂, SrCl₂, Sr(OH)₂, SrC₂O₄, Sr(CH₃COOO)₂ or the like.

According to the invention, the mole ratio of Ba and Sr is 9:1 to 5:5, and the mole number of Mg/ the mole number of (Ba+Sr) is more than 0 and 2 or less and preferably 0.001 to 2. In case that the mole number of Ba is high relative to Sr, there is an advantage of increased oxygen partial pressure, but an amount of oxygen adsorption may be reduced. Thus, the above limited scope is advantageous. In addition, if the mole number of Mg/ the mole number of (Ba + Sr) is in the above range, the carbonate-based compound containing Mg, Ba and Sr is predominantly precipitated.

In the oxygen selective adsorbent according to another exemplary embodiment of the present invention, the particles may have transition oxygen partial pressure of 120 - 300mmHg, or oxygen sorption capacity of 1 - 2.5 mmol O₂/g under 1 atm of oxygen.

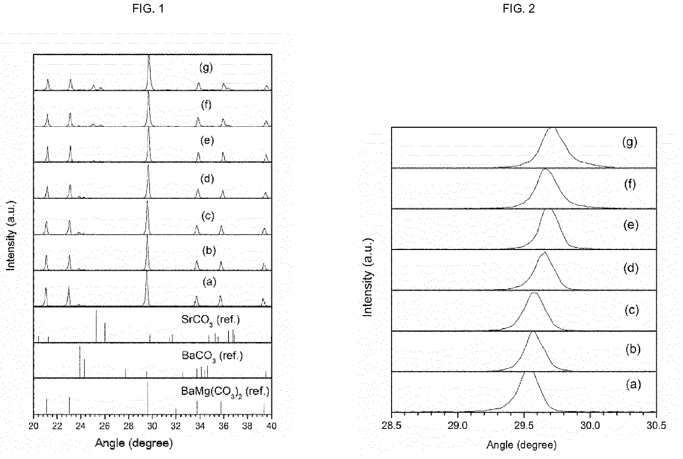

An X-ray diffraction analysis, an adsorption isothermal line, a scanning microscope analysis, and adsorption/desorption rate for a compound of the formula BaₓSr₍₁₋ₓ₎Mg_{y}(CO₃)_{(1+y)} or BaₓSr₍₁₋ₓ₎CO₃, respectively (not according to the invention) using various mole ratios in the preparation of the same are represented in FIGS. 1 to 5. If the mole ratio of Ba to Sr is excessively high, that is, higher than 9, the adsorption equilibrium partial pressure is excessively increased, thereby requiring high vacuum, and if the mole ratio of Ba to Sr is less than 5:5, the amount of oxygen adsorption is reduced.

In addition, in the oxygen selective adsorbent obtained according to the method of the present invention, magnesium has a function of increasing adsorption rate of the adsorbent, and imparting a thermal stability. The mole number of Mg/ the mole number of (Ba+Sr) is more than 0 and 2 or less and preferably 0.001 to 2. If the mole ratio is over 10, the amount of oxygen adsorption is reduced, and if the adsorption/desorption is carried out at high temperature of 600°C or more, Mg may be added in the mole ratio of Mg to Ba of 0.1 or more, in order to increase a thermal stability.

In an oxygen selective adsorbent containing BaₓSr₍₁₋ₓ₎CO₃ particles according to the present disclosure, BaₓSr₍₁₋ₓ₎CO₃ particles may have transition oxygen partial pressure of 190 - 300mmHg, or oxygen sorption capacity of 1 - 2 mmol O₂/g under 1 atm of oxygen.

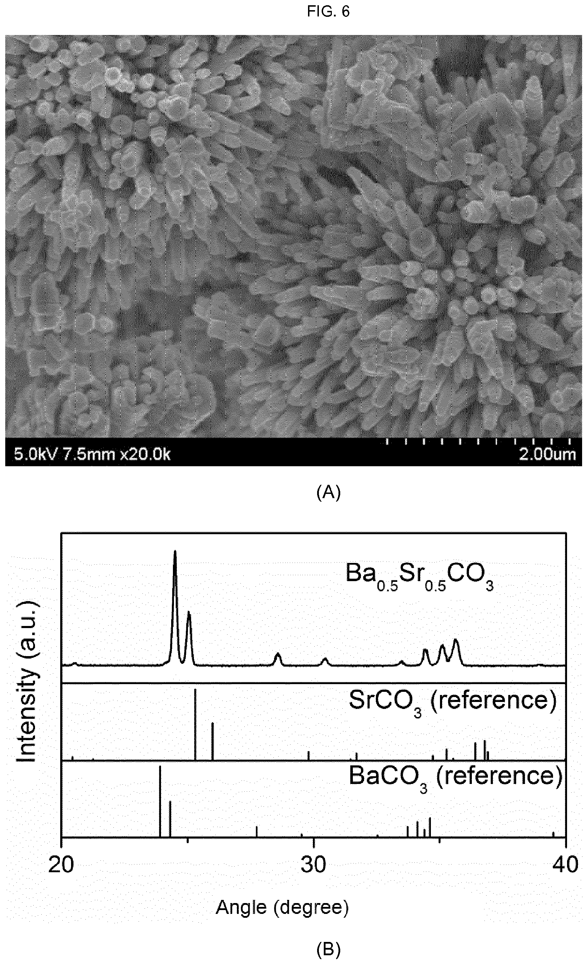

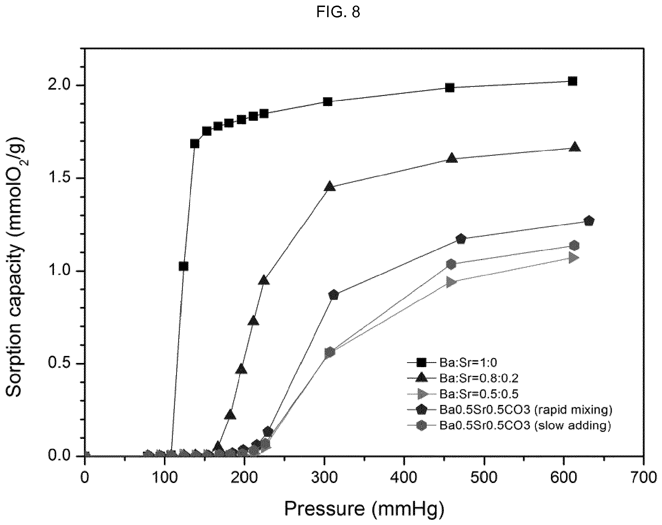

The X-ray diffraction analysis, the adsorption isothermal line, the scanning microscope analysis, and the adsorption/desorption rate of the aforementioned BaₓSr₍₁₋ₓ₎CO₃ particles (not according to the invention) prepared by a rapid mixing method wherein a mixed-solution of a barium-containing compound and a strontium-containing compound is directly mixed with an ammonium carbonate aqueous solution, or a slow feeding method wherein a mixed solution of a barium-containing compound and a strontium-containing compound, and an ammonium carbonate aqueous solution are mixed with slowly feeding respectively, are shown in FIGS. 6 to 8. In addition, in FIG. 8, the adsorption isothermal lines of the aforementioned BaₓSr₍₁₋ₓ₎Mg_{y}(CO₃)_{(1+y)} particles with magnesium are shown together, and compared. The particles without magnesium show a result of adsorption equilibrium partial pressure similar to the particles with magnesium, but have an adsorption amount increased by 10 - 20% compared with the particles with magnesium.

### Examples (not according to the invention)

### Reference Example 1: Preparation of BaₓSr₍₁₋ₓ₎Mg_{y}(CO₃)_{(1+y)}

4g of BaCO₃ powder (0.02 mole) and 4.3g of Na₂CO₃ (0.04 mole) were mixed in 200mL of distilled water, and dispersed using an ultrasonic disperser and a stirrer for 30 minutes to be dissolved well at room temperature. The dispersed solution was transferred on a round flask positioned on a stirring mantle capable of precise temperature control, and heated at 90°C with stirring. A condenser was mounted in the round flask to condense evaporated water using cooling water at 15°C and reflux it. 10.39g of Mg(NO₃)₂6H₂O (0.04 mole) and 4.23 g of Sr(NO₃)₂ (0.02 mole) were mixed in 100mL of distilled water, and the mixed solution was slowly injected using a metering pump at a rate of 0.36 mL/min to the previously prepared mixed solution containing Ba. After the injection was completed, further stirring at the same temperature was carried out for 4 hours to complete the reaction. White suspension was vacuum filtered (pore size 5µm), and washed with about 2,000mL of distilled water to remove remaining ions. Prepared crystalline particles were dried in an oven at 120°C for a day, then sintered under atmosphere at 500°C for about 3 hours, and processed into fine powder using a sieve of 100µm.

Meanwhile, mixing was carried out with the mixing ratio of Ba and Sr of 1:0, 0.9:0.1, 0.8:0.2, 0.7:0.3, 0.6:0.4 and 0.5:0.5, respectively, based on their precursor mole number. In this case, the sum of mole number of Ba and Sr was set to 0.04 mole. Each practicing condition is summarized in the following Table 1.

Herein, in the elemental ratio of Ba and Sr, x:(1-x), x is more than 0 less than 1. The mole number of Mg was the same as that of (Ba+Sr), but not limited thereto.

**[Table 1] (Reference) Experimental conditions**

| Test Number | Ba (mole) | Sr (mole) | Mg (mole) | Ba(x):Sr(1-x) (mole) |
|---|---|---|---|---|
| Test 1 | 0.036 | 0.004 | 0.04 | 0.9:0.1 |
| Test 2 | 0.032 | 0.008 | 0.04 | 0.8:0.2 |
| Test 3 | 0.028 | 0.012 | 0.04 | 0.7:0.3 |
| Test 4 | 0.024 | 0.016 | 0.04 | 0.6:0.4 |
| Test 5 | 0.020 | 0.020 | 0.04 | 0.5:0.5 |

### Comparative Example 1: Preparation of BaMg(CO₃)₂ (in the same manner as Reference Example 1 except for addition of Sr(NO₃)₂)

8g of BaCO₃ powder (0.04 mole) and 4.3g of Na₂CO₃ (0.04 mole) were mixed in 200mL of distilled water, and dispersed using an ultrasonic disperser and a stirrer for 30 minutes to be dissolved well at room temperature. The dispersed solution was transferred on a round flask positioned on a stirring mantle capable of precise temperature control, and heated at 90°C with stirring. A condenser was mounted in the round flask to condense evaporated water using cooling water at 15°C and reflux it. 10.39g of Mg(NO₃)₂6H₂O (0.04 mole) was mixed with 100mL of distilled water, and the mixed solution was slowly injected using a metering pump at a rate of 0.36 mL/min to the previously prepared mixed solution containing Ba. After the injection was completed, further stirring at the same temperature was carried out for 4 hours to complete the reaction. White suspension was vacuum filtered (pore size 5µm), and washed with about 2,000mL of distilled water to remove remaining ions. Prepared crystalline particles were dried in an oven at 120°C for a day, then sintered under atmosphere at 500°C for about 3 hours, and processed into fine powder using a sieve of 100µm.

### Experimental Example 1 (Reference): Powder X-ray diffraction analysis

Filtered and dried particles were analyzed on their crystal structure using powder X-ray diffraction, and the result is shown in FIG. 1. Compared with the particles without a Sr additive, as the amount of injected Sr increases, and that of injected Ba decreases, the characteristic peak of BaMg(CO₃)₂ was shifted to a higher angle (right side in FIG. 1). This is because Ba is partially replaced with Sr, so that BaMg(CO₃)₂ is changed to BaₓSr₍₁₋ₓ₎Mg_{y}(CO₃)_{(1+y)}, that is, the lattice size is decreased due to the replacement of Ba with smaller Sr. Meanwhile, when the concentration of injected Ba is decreased and that of the Sr additive is increased, the peak of some BaCO₃ present in a small amount is decreased, and the peak of SrCO₃ is gradually increased, but overall,
the structure of (Ba,Sr)Mg(CO₃)₂ was prominent in the composition of the product.

### Experimental Example 2 (Reference): Scanning electron microscope analysis

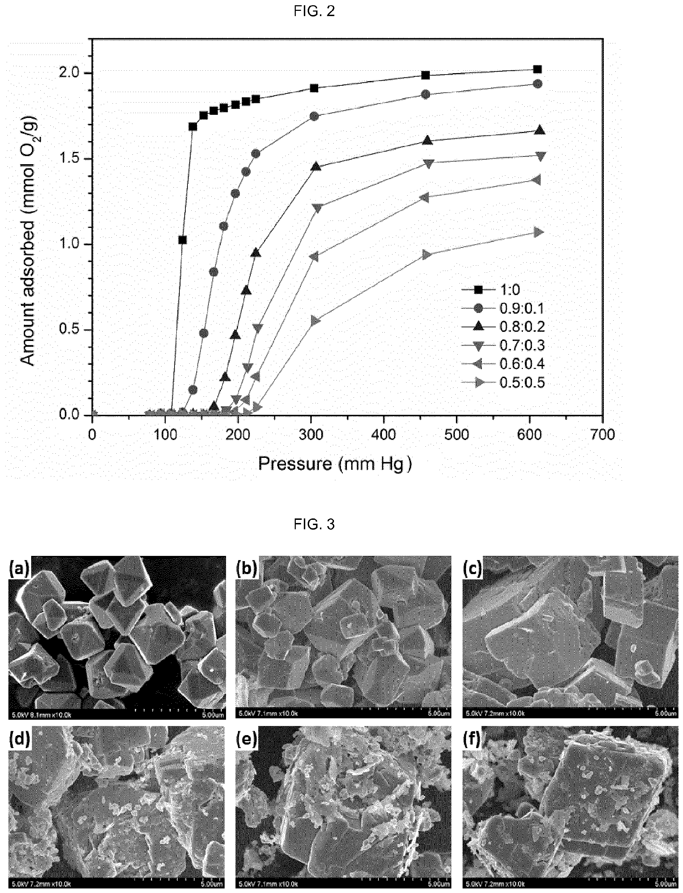

The result of analyzing the shape of the prepared crystalline particles using a scanning electron microscope is shown in FIG. 3, and the produced crystalline particles without a Sr additive had similar shape to a truncated octahedron having a size of 1 - 3µm. However, as the concentration of the additive is increased, the particles showed a cubic shape, and had a larger size of 3 - 5µm. If the concentration of the Sr additive is high, it appeared that some small amorphous SrCO₃ particles were produced and attached to the surface of cubic BaₓSr₍₁₋ₓ₎Mg_{y}(CO₃)_{(1+y)} and the like.

### Experimental Example 3 (Reference): Composition of adsorbent element

In order to identify the ratios of metal elements present in the produced particles, inductive coupled plasma-atomic emission spectroscopy (ICP-AES) was used. As represented in the following Table 2, the mixing ratios of Ba, based on the concentration of the injected solution and based on the concentration in the prepared solid carbonate crystal were similar to each other. Meanwhile, Ba concentration in the particle without an additive was 4.03 mmol/g-powder, which is higher than Mg concentration of 3.80 mmol/g-powder, and higher than calculated Ba concentration in pure BaMg(CO₃)₂ crystal of 3.55 mmol/g-powder, thus, indicating the presence of some BaCO₃.

**[Table 2] Metal element compositional ratios of crystalline particles prepared by mixing with an Me_{A} additive (^{#} concentration of injected solution, * concentration in prepared solid carbonate crystal)**

| [Ba]/([Ba]+[Sr])# | 1 | 0.95 | 0.9 | 0.8 | 0.6 | 0.5 |
|---|---|---|---|---|---|---|
| Ba (mmol/g-powder)* | 4.03 | 3.65 | 3.41 | 3.29 | 2.8 | 2.27 |
| Sr (mmol/g-powder)* | 0 | 0.29 | 0.37 | 0.79 | 1.83 | 2.17 |
| Mg (mmol/g-powder)* | 3.80 | 3.79 | 3.78 | 3.90 | 3.87 | 3.84 |
| Na (mmol/g-powder)* | 0.42 | 0.72 | 0.34 | 0.40 | 0.43 | 0.37 |
| [Ba]/([Ba]+[Sr])* | 1.0 | 0.927 | 0.902 | 0.807 | 0.604 | 0.511 |

### Experimental Example 4 (Reference): Measurement of isothermal adsorption equilibrium curves

In order to obtain an isothermal adsorption equilibrium data of the oxygen selective adsorbents, vacuum gravimetry was used in this study. After a carbonate precursor was prepared in a pellet form, it was sintered through pyrolysis at high temperature and processed into an oxide form. When a chamber of a thermal gravimetric analyzer was maintained at a constant temperature under vacuum condition, oxygen was slowly injected while a separately mounted pressure gauge was monitored. When the oxygen pressure to be adsorbed was reached, the injection of oxygen was stopped, and such state was maintained for 1 hour, so as to record the weight change of the adsorbent. When the adsorption was completed, the experiment proceeded in a manner that oxygen was slowly injected until the next oxygen pressure was reached. Meanwhile, since the weight of a scale is changed by a buoyancy effect caused by vacuum pressure, a blank test without a sample was carried out under the same pressure condition, in order to calibrate the difference.

The result is shown in FIG. 2. When a Sr additive is used, as the mixing mole ratio of Ba:Sr is reduced from 1:0 in Comparative Example to 0.9:0.1, 0.8:0.2, 0.7:0.3, 0.6:0.4 and 0.5:0.5, respectively, the adsorption equilibrium partial pressure was increased from 108 mmHg to 124, 167, 197, 211 and 225 mmHg, respectively. In the course of conversion of BaO into BaO₂ by the reaction with O₂, the Sr additive stabilized a BaO phase to change the equilibrium curve. Meanwhile, as the mixing ratio of the additive is higher, the amount of oxygen adsorption was decreased from 2.08 mmol/g to 1.94, 1.66, 1.52, 1.38, 1.07 mmol/g, respectively. In practice, the adsorption amount at a mixing ratio of 0.5:0.5 was 1.07 mmol/g, which is about half of 2.08 mmol/g under the condition without the additive. Thus, optimization of the amount of oxygen adsorption, regeneration pressure and adsorption temperature is required in the actual oxygen adsorption process.

### Experimental Example 5 (Reference): Adsorption/ desorption rate

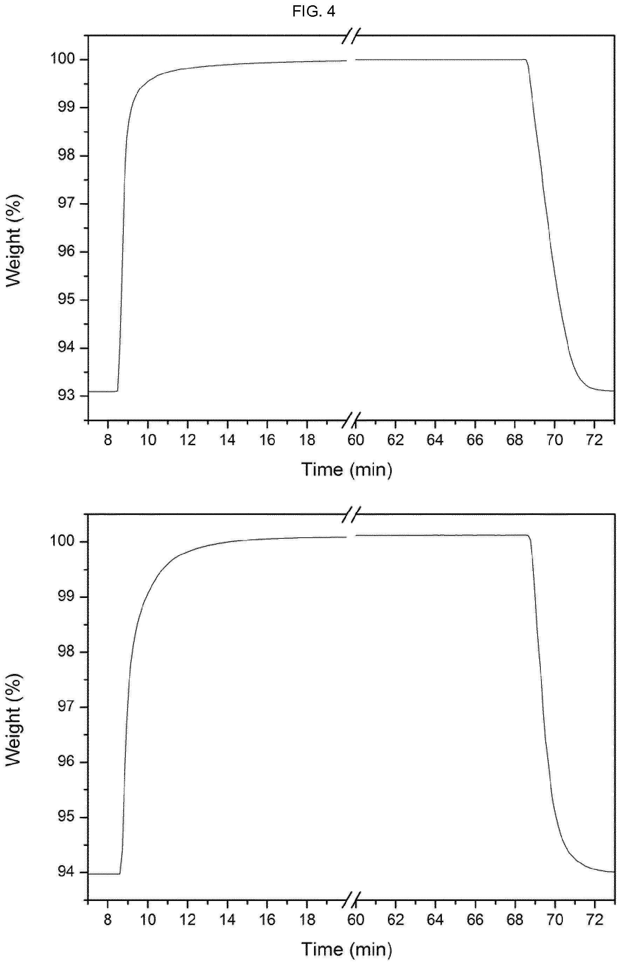

FIG. 4 shows the result of measuring oxygen adsorption rate and desorption rate using normal pressure thermogravimetry. The oxygen adsorption was carried out using the sintered oxygen adsorbent, by injecting 90 mL/min of oxygen and 10 mL/min of Ar with mixing at 700°C, and measuring a weight change for 1 hour, then injecting 100 mL/min of Ar at the same temperature, and measuring a weight change for 1 hour. When the time required to reach 80% of a new equilibrium adsorption amount in one equilibrium state is defined as a relaxation time, t₈₀, the adsorption time for an adsorbent without Sr was 38 seconds. In case of desorption, the adsorption time was about 130 seconds. Meanwhile, in case of a bimetallic oxide adsorbent containing Ba and a Sr additive in a ratio of 0.8:0.2, the adsorption time was 66 seconds which is slower than that of the adsorbent without an Sr additive, but applicable to a process, and the desorption time was measured as being 72 seconds which is faster. Thus, it appeared that Sr functions advantageously to desorption.

### Experimental Example 6 (Reference): Stability evaluation

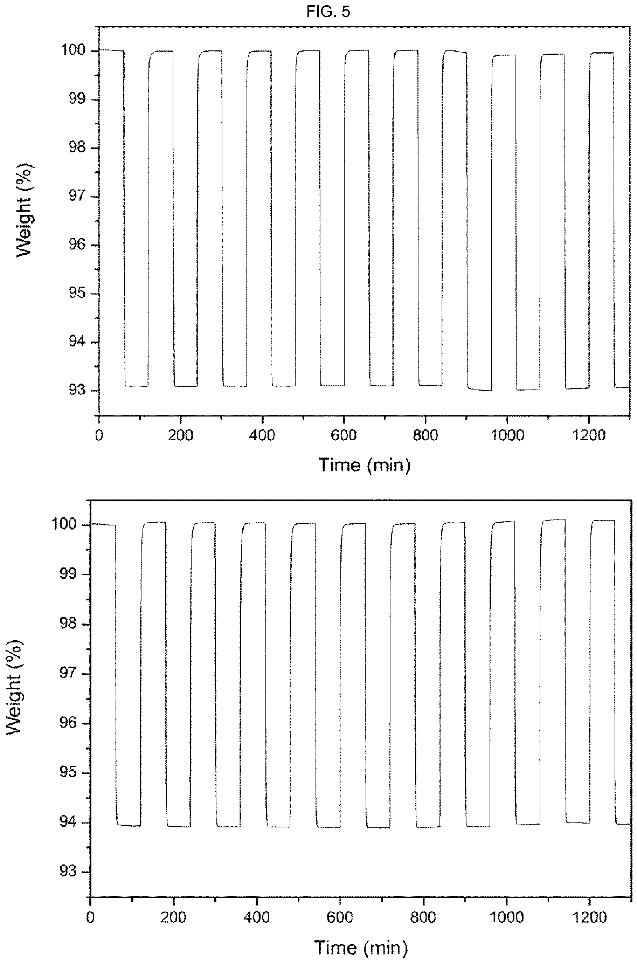

FIG. 5 shows the result of stability evaluation at high temperature by alternating oxygen injection and Ar injection to repeat the evaluation 10 times. As a result, in both cases of the adsorbents with and without the additive, the oxygen adsorption amount was constant during 10 times of evaluation for 20 hours, and the slowing phenomenon of adsorption/desorption rate was not observed.

### Reference Example 2: Preparation of BaₓSr₍₁₋ₓ₎CO₃

An adsorbent having Ba and Sr mixed therein except for Mg was prepared, so as to measure an oxygen adsorption equilibrium. 13.068 g of Ba(NO₃)₂ (0.05 mole) and 10.58 g of Sr(NO₃)₂ (0.05 mole) were mixed in 100mL of distilled water, transferred to a round flask positioned on a stirring mantle capable of precise temperature control, and heated at 90°C with stirring. A condenser was mounted in the round flask to condense evaporated water using cooling water at 15°C and reflux it. 9.609 g of (NH₄)₂CO₃ (0.1 mole) was mixed in 100mL of distilled water, then rapidly mixed with the previously prepared mixed solution containing Ba/Sr, and stirred. Further stirring at the same temperature was carried out for 4 hours to complete the reaction. White suspension was vacuum filtered (pore size 5µm), and washed with about 2,000mL of distilled water to remove remaining ions. Prepared crystalline particles were dried in an oven at 120°C for a day, then sintered under atmosphere at 500°C for about 3 hours, and processed into fine powder using a sieve of 100µm.

### Experimental Example 7 (Reference): Scanning electron microscopic analysis and powder X-ray diffraction analysis

As a result of analysis of the shape of the crystalline particles prepared in Reference Example 2 using a scanning electron microscope, as shown in FIG. 6(A), the crystalline particles produced by mixing Ba and Sr in a ratio of 0.5:0.5 represented a needle-shape.

Filtered and dried particles were analyzed on their crystal structure using powder X-ray diffraction, and the result is shown in FIG. 6(B). Since the peak of a carbonate of Ba_{0.5}Sr_{0.5}CO₃ produced when mixing Ba and Sr in a ratio of 0.5:0.5 was positioned in the middle between the characteristic peaks of BaCO₃ and SrCO₃, it appeared that Ba and Sr were uniformly mixed. This is because by the addition of Sr which is smaller than Ba, Ba was partially replaced with Sr, so that BaCO₃ was changed to BaₓSr₍₁₋ₓ₎CO₃, that is, the lattice size is decreased due to the replacement of Ba with smaller Sr. Meanwhile, it is appreciated that BaₓSr₍₁₋ₓ₎ CO₃ prepared by the present Reference Examples contains Ba and Sr uniformly mixed therein, differently from the case that when BaCO₃ and SrCO₃ were simply mixed, their peaks were separated.

### Reference Example 3: Preparation of BaₓSr₍₁₋ₓ₎CO₃

It was prepared in a manner of slowly mixing the adsorbent having Ba and Sr mixed therein, except for Mg. 5.227g of Ba(NO₃)₂ (0.02 mole) and 4.232g of Sr(NO₃)₂ (0.02 mole) were mixed in 100mL of distilled water, transferred to a round flask positioned on a stirring mantle capable of precise temperature control, and heated at 90°C with stirring. A condenser was mounted in the round flask to condense evaporated water using cooling water at 15°C and reflux it. 0.9609g of (NH₄)₂CO₃ (0.01 mole) was mixed with 100mL of distilled water, and the mixed solution was slowly injected using a metering pump at a rate of 0.36 mL/min to the previously prepared mixed solution containing Ba/Sr. After the injection was completed, further stirring at the same temperature was carried out for 4 hours to complete the reaction. White suspension was vacuum filtered (pore size 5µm), and washed with about 2,000mL of distilled water to remove remaining ions. Prepared crystalline particles were dried in an oven at 120°C for a day, then sintered under atmosphere at 500°C for about 3 hours, and processed into fine powder using a sieve of 100µm. Each Ba/Sr mixing ratio is shown in Table 3.

**[Table 3] Experimental conditions**

| Test Number | Ba (mole) | Sr (mole) | Ba(x):Sr(1-x) (mole) |
|---|---|---|---|
| Test 1 | 0.036 | 0.004 | 0.8:0.2 |
| Test 2 | 0.024 | 0.016 | 0.6:0.4 |
| Test 3 | 0.020 | 0.020 | 0.5:0.5 |
| Test 4 | 0.016 | 0.024 | 0.4:0.6 |
| Test 5 | 0.004 | 0.036 | 0.2:0.8 |

### Experimental Example 8 (Reference): Scanning electron microscopic analysis and powder X-ray diffraction analysis

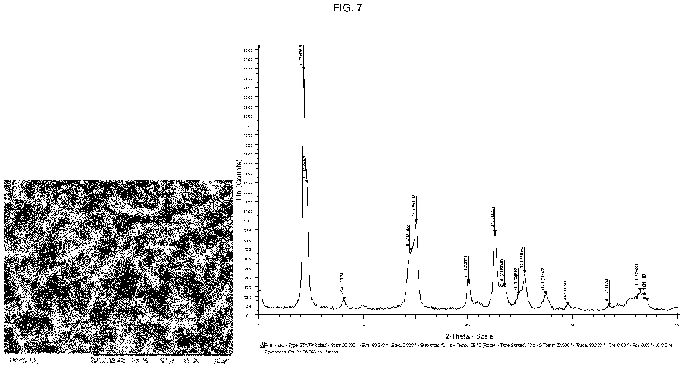

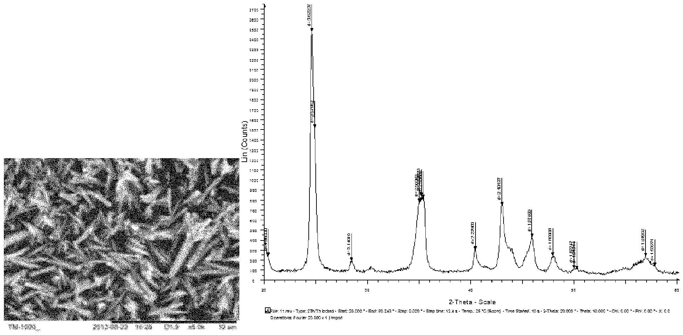

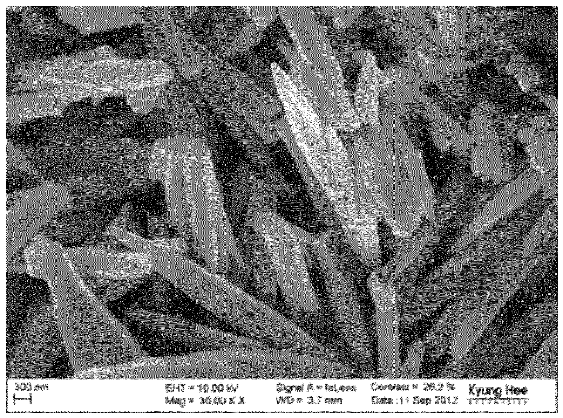

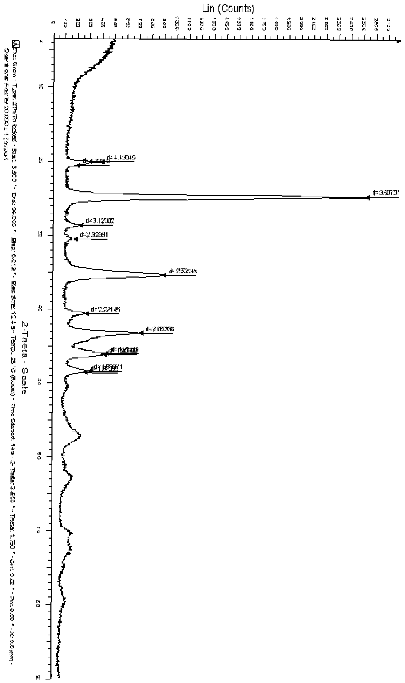

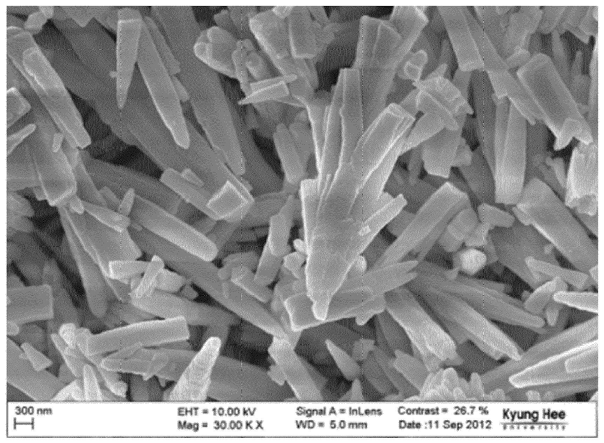

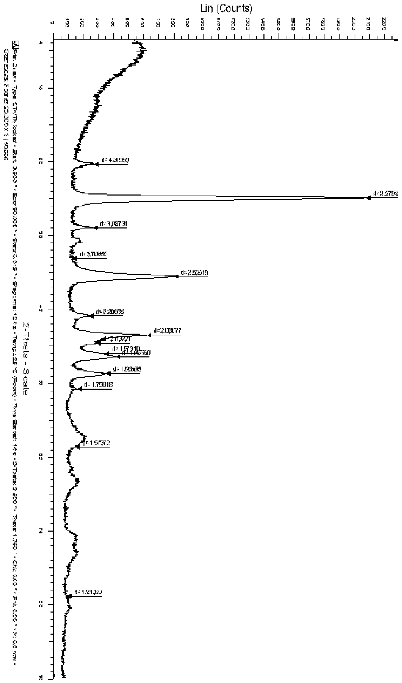

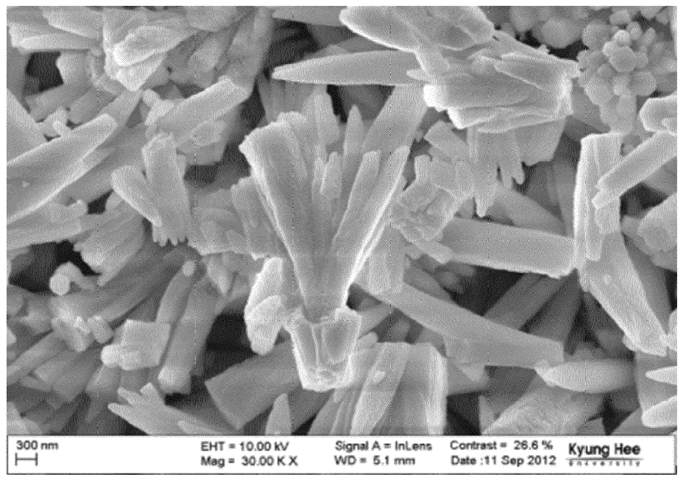

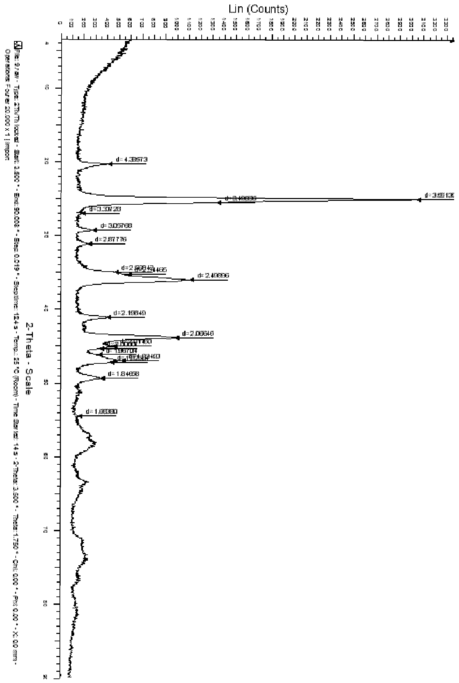

As a result of analysis of the shape of the crystalline particles prepared in Reference Example 3 using a scanning electron microscope, as shown in FIG. 7, the produced crystalline particles represented a needle-shape.

Filtered and dried particles were analyzed on their crystal structure using powder X-ray diffraction, and the result is also included in FIG. 7. As Sr was increased by controlling the mixing ratio of Ba and Sr, the diffraction peak was shifted to a larger angle, which confirmed that Ba was replaced with Sr to be uniformly mixed.

### Experimental Example 9 (Reference): Measurement of isothermal adsorption equilibrium curve

FIG. 8 shows measured isothermal adsorption curves of the adsorbents prepared from Reference Examples 2 and 3. The adsorption equilibrium partial pressure was increased with only Ba and Sr, without Mg. The adsorption equilibrium partial pressure of the adsorbents of Reference Reference Examples 2 and 3 having Ba and Sr in 0.5:0.5 without Mg, was 215 mmHg and 226 mmHg, respectively, which appeared to be similar to 225 mmHg in the case of the adsorbent containing Mg wherein Ba:Sr:Mg = 0.5:0.5:1. The adsorption amount of the adsorbents of Reference Examples 2 and 3 having Ba and Sr in 0.5:0.5 without Mg was 1.27 mmol/g and 1.13 mmol/g, respectively, which is higher than 1.07 mmol/g of the adsorbent containing Mg.

### INDUSTRIAL APPLICABILITY

The present invention may provide an oxygen selective adsorbent capable of removing and recovering oxygen even under low vacuum (high oxygen partial pressure) and a preparation method thereof by adding another metal such as Sr to Ba which is an active element for oxygen adsorption.

## Claims

1. A method of preparing of an oxygen selective adsorbent containing Ba, Sr and Mg, the method comprising the steps of:
(a) reacting a barium-containing compound with a magnesium precursor and a strontium precursor, wherein
a second mixed solution of the magnesium precursor and the strontium precursor
is slowly injected into
a first mixed solution of the barium containing compound and a carbonate compound
and reacted with stirring at 50 to 120°C, wherein
the first mixed solution is prepared by mixing the barium-containing compound and the carbonate compound in distilled water, and dispersing the mixture by using an ultrasonic disperser and a stirrer to dissolve the barium-containing compound and the carbonate compound at room temperature,
and wherein
the second mixed solution is prepared by mixing the magnesium precursor and the strontium precursor in distilled water,
(b) drying and sintering the product obtained in step (a), wherein the sintering is carried out at about 700°C to 800°C,
wherein the mole ratio of Ba and Sr is 9:1 to 5:5, and the ratio mole number of Mg / mole number of (Ba + Sr) is more than 0 and 2 or less.

2. The method of preparing the oxygen selective adsorbent of claim 1,
wherein
the barium-containing compound is any one selected from the group consisting of BaCO₃, BaCl₂, Ba (NO₃)₂, Ba(OH)2 and BaC₂O₄;
and the carbonate compound is any one selected from the group consisting of Na₂CO₃, NaHCO₃, K₂CO₃, KHCO₃, (NH₄)₂CO₃ and NH₄HCO₃.

3. The method of preparing the oxygen selective adsorbent of claim 1 or 2, wherein
the magnesium precursor is any one selected from the group consisting of Mg(NO₃)₂, MgCl₂, Mg(OH)₂, MgC₂O₄ and Mg(CH₃COOO)₂.

4. The method of preparing the oxygen selective adsorbent of claim 1 or 2, wherein
the strontium precursor is any one selected from the group consisting of Sr(NO₃)₂, SrCl₂, Sr(OH)₂, SrC₂O₄ and Sr(CH₃COOO)₂.

5. An oxygen selective adsorbent containing Ba, Sr and Mg prepared according to the method of any one of claims 1 to 4.

## Patentansprüche

1. Verfahren zur Herstellung eines sauerstoffselektiven Adsorptionsmittels, das Ba, Sr und Mg enthält, wobei das Verfahren die folgenden Schritte umfasst:
(a) Umsetzen einer bariumhaltigen Verbindung mit einem Magnesiumvorläufer und einem Strontiumvorläufer, wobei
eine zweite gemischte Lösung des Magnesiumvorläufers und des Strontiumvorläufers
langsam injiziert wird in
eine erste gemischte Lösung der bariumhaltigen Verbindung und einer Carbonatverbindung,
und Umsetzen unter Rühren bei 50 bis 120°C, wobei
die erste gemischte Lösung hergestellt wird durch Mischen der bariumhaltigen Verbindung und der Carbonatverbindung in destilliertem Wasser und Dispergieren der Mischung unter Verwendung einer Ultraschall-Dispergiereinrichtung und eines Rührers, um die bariumhaltige Verbindung und die Carbonatverbindung bei Raumtemperatur zu lösen,
und wobei
die zweite gemischte Lösung hergestellt wird durch Mischen des Magnesiumvorläufers und des Strontiumvorläufers in destilliertem Wasser,
(b) Trocknen und Sintern des in Schritt (a) erhaltenen Produkts, wobei das Sintern bei etwa 700°C bis 800°C durchgeführt wird,
wobei das Molverhältnis von Ba und Sr 9:1 bis 5:5 beträgt und das Verhältnis Molzahl von Mg / Molzahl von (Ba + Sr) mehr als 0 und 2 oder weniger beträgt.

2. Verfahren zur Herstellung des sauerstoffselektiven Adsorptionsmittels nach Anspruch 1, wobei
die bariumhaltige Verbindung eine beliebige, ausgewählt aus der Gruppe, bestehend aus BaCO₃, BaCl₂, Ba(NO₃)₂, Ba(OH)₂ und BaC₂O₄, ist;
und die Carbonatverbindung eine beliebige, ausgewählt aus der Gruppe, bestehend aus Na₂CO₃, NaHCO₃, K₂CO₃, KHCO₃, (NH₄)₂CO₃ und NH₄HCO₃, ist.

3. Verfahren zur Herstellung des sauerstoffselektiven Adsorptionsmittels nach Anspruch 1 oder 2, wobei
der Magnesiumvorläufer ein beliebiger, ausgewählt aus der Gruppe, bestehend aus Mg(NO₃)₂, MgCl₂, Mg(OH)₂, MgC₂O₄ und Mg(CH₃COOO)₂, ist.

4. Verfahren zur Herstellung des sauerstoffselektiven Adsorptionsmittels nach Anspruch 1 oder 2, wobei
der Strontiumvorläufer ein beliebiger, ausgewählt aus der Gruppe, bestehend aus Sr(NO₃)₂, SrCl₂, Sr(OH)₂, SrC₂O₄ und Sr(CH₃COOO)₂, ist.

5. Sauerstoffselektives Adsorptionsmittel, das Ba, Sr und Mg enthält, das gemäß dem Verfahren nach einem der Ansprüche 1 bis 4 hergestellt wurde.

## Revendications

1. Procédé de préparation d'un adsorbant sélectif de l'oxygène contenant Ba, Sr et Mg, le procédé comprenant les étapes consistant à :
(a) faire réagir un composé contenant du baryum avec un précurseur de magnésium et un précurseur de strontium, dans lequel
une seconde solution mixte du précurseur de magnésium et du précurseur de strontium
est lentement injectée dans
une première solution mixte du composé contenant du baryum et d'un composé de carbonate
et mise à réagir sous agitation entre 50 et 120 °C, dans lequel
la première solution mixte est préparée en mélangeant le composé contenant du baryum et le composé de carbonate dans de l'eau distillée, et en dispersant le mélange en utilisant un disperseur à ultrasons et un agitateur pour dissoudre le composé contenant du baryum et le composé de carbonate à température ambiante,
et dans lequel
la seconde solution mixte est préparée en mélangeant le précurseur de magnésium et le précurseur de strontium dans de l'eau distillée,
(b) sécher et fritter le produit obtenu à l'étape (a), dans lequel le frittage est réalisé entre environ 700 °C et 800 °C,
dans lequel le rapport molaire de Ba et Sr est de 9:1 à 5:5 et le rapport nombre molaire de Mg/nombre molaire de (Ba + Sr) est supérieur à 0 et à 2 ou moins.

2. Procédé de préparation de l'adsorbant sélectif de l'oxygène selon la revendication 1, dans lequel
le composé contenant du baryum est choisi dans le groupe constitué de BaCO₃, BaCl₂, Ba(NO₃)₂, Ba(OH)₂ et BaC₂O₄ ;
et le composé carbonate est choisi dans le groupe constitué de Na₂CO₃, NaHCO₃, K₂CO₃, KHCO₃, (NH₄)₂CO₃ et NH₄HCO₃.

3. Procédé de préparation de l'adsorbant sélectif de l'oxygène selon la revendication 1 ou 2, dans lequel
le précurseur de magnésium est choisi dans le groupe constitué de Mg(NO₃)₂, MgCl₂, Mg(OH)₂, MgC₂O₄ et Mg (CH₃COOO)₂.

4. Procédé de préparation de l'adsorbant sélectif de l'oxygène selon la revendication 1 ou 2, dans lequel
le précurseur du strontium est un quelconque choisi dans le groupe constitué de Sr(NO₃)₂, SrCl₂, Sr(OH)₂, SrC₂O₄ et Sr(CH₃COOO)₂.

5. Adsorbant sélectif de l'oxygène contenant Ba, Sr et Mg préparé selon le procédé de l'une quelconque des revendications 1 à 4.
